(19) **Europäisches Patentamt**

**European Patent Office**

**Office européen des brevets**

(11) **EP 1 114 113 B1**

(12) **FASCICULE DE BREVET EUROPEEN**

(45) Date de publication et mention
de la délivrance du brevet:
**26.03.2003 Bulletin 2003/13**

(51) Int Cl.⁷: **C09J 151/06**, C09J 151/00,
C09J 153/00, B65D 39/00

(21) Numéro de dépôt: **99931359.6**

(22) Date de dépôt: **19.07.1999**

(86) Numéro de dépôt international:
**PCT/FR99/01758**

(87) Numéro de publication internationale:
**WO 00/005320 (03.02.2000 Gazette 2000/05)**

(54) **COMPOSITION THERMOCOLLANTE, UTILISATION DE CELLE-CI ET BOUCHON D'OBTURATION FABRIQUE A PARTIR DE CETTE COMPOSITION**

THERMOKLEBENDE ZUSAMMENSETZUNG, IHRE VERWENDUNG UND DARAUS HERGESTELLTER STOPFEN

HEAT SEALING COMPOSITION, USE THEREOF AND CLOSURE PLUG MADE FROM SAID COMPOSITION

(84) Etats contractants désignés:
**AT BE CH CY DE DK ES FI FR GB GR IE IT LI LU MC NL PT SE**

(30) Priorité: **21.07.1998 FR 9809310**

(43) Date de publication de la demande:
**11.07.2001 Bulletin 2001/28**

(73) Titulaire: **RAPID S.A.**
**F-75017 Paris (FR)**

(72) Inventeurs:
• **LEON, Jean-Pierre, René**
**F-78800 Houilles (FR)**

• **VIGOUROUX, Philippe**
**78700 Conflans Sainte Honorine (FR)**
• **PIERROT, Jean-Michel**
**F-27170 Grosley-sur-Risle (FR)**

(74) Mandataire: **Thinat, Michel**
**Cabinet Weinstein,**
**56 A, rue du Faubourg Saint-Honoré**
**75008 Paris (FR)**

(56) Documents cités:
EP-A- 0 228 819          EP-A- 0 345 069
EP-A- 0 733 558          EP-A- 0 779 307
DE-A- 19 745 701        FR-A- 2 399 954
US-A- 3 760 031          US-A- 4 602 056

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

L'invention se rapporte à une composition thermocollante ainsi qu'à son utilisation, en particulier pour la fabrication d'un bouchon d'obturation d'une ouverture quelconque.

Elle concerne également un bouchon d'obturation d'une ouverture quelconque constitué de la composition thermocollante de l'invention.

Il a déjà été proposé des obturateurs pour boucher une ouverture quelconque et plus particulièrement une ouverture dans une pièce métallique.

Par exemple, on a déjà proposé des obturateurs constitués d'une matière plastique à base de polyéthylène (PE) et de polypropylène (PP), ou d'un mélange de polypropylène et d'un terpolymère d'éthylène propylène diène (PP/EPDM).

Un tel obturateur est constitué d'un corps en la matière plastique voulue ayant la forme de l'ouverture à obturer et comporte une simple ou double lèvre d'étanchéité située le plus souvent en prolongement du corps de l'obturateur.

Cet obturateur était placé dans l'ouverture à obturer sans aucun traitement ultérieur. Cependant, l'étanchéité à l'eau de ruissellement, et à la poussière de cet obturateur est faible. De plus, lorsqu'on applique une pression sur cet obturateur en place, celui-ci se décolle aisément.

On a alors proposé un obturateur constitué d'un corps en acier et d'un cordon de colle fusible à chaud (hot melt) déposé sur la surface périphérique du corps. Des pattes d'accrochage sont disposées à la périphérie du corps de l'obturateur afin de maintenir en place cet obturateur. Une fois l'obturateur positionné sur l'ouverture, l'ensemble est passé dans une étuve et la colle constituant le cordon de colle fusible fond et, lors du refroidissement de l'ensemble, durcit. Ainsi, on réalise l'étanchéité obturateur/support de l'ouverture à obturer. La colle fusible (hot melt) qui est utilisée est une colle à base d'un copolymère d'éthylène-acétate de vinyle (EVA) et de ses dérivés

Cependant, le corps métallique d'un tel obturateur pose des problèmes lors de son encastrement dans l'ouverture à obturer en raison de sa dureté et de son manque de flexibilité.

Afin d'éviter ce problème dû au corps métallique de l'obturateur lui-même, on a également proposé des obturateurs dont le corps est en matière plastique et, comportant un cordon de colle fusible déposé sur la surface périphérique de ce corps.

L'étanchéité de l'obturateur sur le support comportant l'ouverture à obturer est réalisée de la même manière que précédemment par un passage en étuve.

Plus précisément, un tel obturateur est généralement composé d'un corps constitué de polyamide 66 ou d'un alliage de polyamide et de polypropylène et, le cordon de colle fusible est un cordon de colle à base d'un copolymère d'éthylène-acétate de vinyle et de ses dérivés.

Ce type d'obturateur avec cordon de colle présente une bonne étanchéité à l'eau de ruissellement, à la poussière ainsi qu'à la pression mais son procédé de fabrication implique une étape de fabrication du corps et une étape de fabrication et positionnement du cordon de colle. Ce procédé est donc long et compliqué à mettre en oeuvre et nécessite, de plus, un appareillage spécifique.

Il est donc souhaitable de simplifier le procédé de fabrication de ce type d'obturateur et d'en améliorer la reproductibilité.

L'invention vise à pallier les inconvénients ci-dessus des obturateurs de l'art antérieur en proposant un obturateur constitué d'une seule et même matière qui, lors d'un passage en étuve, permette d'obturer l'ouverture, par exemple d'une plaque métallique, tout en réalisant l'étanchéité voulue à l'eau de ruissellement, à la poussière et à la pression, et qui soit réalisable à un coût faible, par un procédé simple et reproductible.

A cet effet, l'invention propose une composition thermocollante du type comprenant un composant adhésif et un composant formant armature caractérisée en ce que :

a) le composant adhésif est un polymère d'éthylène-acétate de vinyle (EVA) -anhydride maléique, et/ou polyéthylène (PE) et/ou polypropylène ou modifié pour avoir des fonctions époxy, et
b) le composant formant armature est un polyéther bloc ester (COPE) ou un un polyéther bloc amide (PEBA) optionnellement en mélange avec un copolymère d'éthylène-propylène, ledit copolymère d'éthylène-propylène pouvant être remplacé en totalité ou en partie par un terpolymère d'éthylène-propylène-diène (EPDM).

Selon une caractéristique de la composition de l'invention, ledit EVA-anhydride maléique contient entre 0,5 % et 40 % en poids d'unités acétate de vinyle et entre 0,05 % et 15 % en poids d'anhydride maléique, le reste étant de l'éthylène.

Plus préférablement, ledit EVA-anhydride maléique contient entre 5 % et 25 % en poids d'unités acétate de vinyle et entre 0,5 % et 10 % en poids d'anhydride maléique, le reste étant de l'éthylène. Le plus préférablement, ledit EVA-anhydride maléique contient 14 % en poids d'unités acétate de vinyle et entre 0,5 % et 1 % en poids d'anhydride maléique.

Dans un mode de réalisation préféré, le polymère d'éthylène-acétate de vinyle-anhydride maléique est un copolymère d'éthylène-acétate de vinyle greffé anhydride maléique.

Lorsque l'EVA est modifié pour avoir des fonctions époxy, les fonctions époxy sont de préférence amenées par du méthacrylate de glycidyle.

De préférence, l'EVA contiendra alors de 1 à 10 % en poids d'unités méthacrylate de glycidyle.

Selon un mode de réalisation de la composition de l'invention, le composant formant armature est un polyéther bloc ester (COPE) dont la partie ester est constituée par du poly(butylène téréphtalate) (PBTP) et dont la partie éther est constituée de motifs éthylène glycol et/ou propylène glycol.

Selon un autre mode de réalisation de la composition de l'invention, le matériau d'armature est du PEBA en mélange avec un copolymère d'éthylène-propylène et/ou un terpolymère d'éthylène-propylène diène, dans lequel le PEBA est constitué de blocs de polyamide 6 et de segments éther à base d'éthylène glycol et/ou propylène glycol et le diène du terpolymère d'éthylène-propylène-diène, lorsque présent, est du butadiène.

De préférence dans les compositions de l'invention, le rapport en poids entre ledit composant adhésif et ledit composant formant armature est compris entre 80 :20 et 70 :30.

Lorsque le composant formant armature est un polyéther bloc ester, le rapport en poids préféré entre le composant adhésif et le polyéther bloc ester est de préférence de 60 :40.

Le rapport en poids préféré entre le composant adhésif et le composant formant armature est de 75 :25, lorsque le composant formant armature est un mélange de PEBA et d'un copolymère d'éthylène propylène et/ou d'un EPDM.

La composition de l'invention peut de plus comprendre des additifs tels que des résines collantes au toucher, des agents ignifugeants, des agents de renforcement, des agents anti-statiques, des agents anti-fongicides, des anti-coagulants, des stabilisants contre la décomposition par la lumière ou la chaleur, des colorants ainsi que des charges, seuls ou en mélange de plusieurs.

Une composition préférée de l'invention comportera outre le composant adhésif et le composant formant armature, une résine conférant un collant au toucher à froid.

Des résines conférant un collant au toucher à froid préférées sont du type ester glycolique, tel que du type ester de diéthylène glycol et ester de dipropylène glycol.

Dans ce cas, la composition de l'invention contient de préférence entre 0,2 % et 10 % en poids de résine conférant un collant au toucher, par rapport au poids total de la composition de l'invention.

L'invention propose également un bouchon d'obturation d'une ouverture quelconque faite dans un support métallique, comprenant la composition de l'invention.

Ce bouchon d'obturation peut être composé entièrement de la composition de l'invention.

En particulier, ce bouchon d'obturation comprend une surface de dimensions supérieures à celles de l'ouverture à obturer ainsi qu'un moyen d'accrochage dans ladite ouverture.

Ce bouchon d'obturation peut être composé entièrement de la composition de l'invention.

Selon un mode de réalisation préféré du bouchon d'obturation de l'invention, celui-ci est composé d'une plaque en un matériau ayant une température de fusion-décomposition supérieure à la température maximale atteinte lors du passage en étuve qui est utilisé pour coller le bouchon sur son support et ayant des dimensions supérieures à l'ouverture à obturer sur au moins une de ses faces, plaque qui est revêtue d'un film fait d'une composition de l'invention contenant une résine collante au toucher à froid.

Dans ce cas, la résine collante au toucher à froid préférée est une résine du type ester glycolique. Tout particulièrement on préfère une résine collante au toucher à froid qui est un ester de diéthylène glycol ou un ester de propylène glycol.

Toujours dans ce cas, le matériau dont la plaque est constituée pourra être une composition de l'invention sans résine collante au toucher, un métal, un élastomère, un élastomère alvéolé, un plastique rigide, du polytétrafluoroéthylène, une composition thermofusible contenant un agent d'expansion se décomposant à une température supérieure ou égale à 140°C.

Selon une caractéristique du bouchon obturateur selon ce mode de réalisation, la plaque a une épaisseur comprise entre 0,5 mm et 5 mm et le film a une épaisseur comprise entre 0,3 mm et 3 mm.

L'invention englobe également l'utilisation de la composition de l'invention pour la fabrication d'un bouchon pour obturer une ouverture quelconque de tout type de support ou de tout autre type de produit industriel.

L'invention sera mieux comprise et d'autres buts, caractéristiques, et avantages de celle-ci apparaîtront mieux dans la description détaillée qui suit et se réfère aux dessins annexés donnés uniquement à titre d'exemple, et dans lesquels :

- la figure 1A est une vue en perspective et côté dessous, d'un bouchon de l'art antérieur ;
- la figure 1B est une vue en élévation de côté de l'obturateur représenté en figure 1A mais en position monté sur le support métallique ;

- la figure 2A est une vue de dessous, en perspective d'un autre obturateur selon l'art antérieur comprenant un cordon de colle qui est représenté séparément sur cette figure ;
- la figure 2B est une vue en perspective, de dessous, de l'obturateur de la figure 2A représenté avec le cordon de colle en place sur l'obturateur ;
- la figure 2C est une vue en perspective côté dessus, de l'obturateur représenté en figure 2B monté sur un support métallique ;
- la figure 2D est une vue de côté en élévation de l'obturateur visible sur la figure 2C ;
- la figure 3A est une vue de dessous en perspective d'un premier mode de réalisation de l'obturateur selon l'invention ;
- la figure 3B est une vue en perspective de côté de l'obturateur représenté en figure 3A monté sur un support métallique ;
- la figure 3C est une vue de côté de l'obturateur de la figure 3B ;
- la figure 3D est une vue en élévation de l'obturateur de la figure 3A ;
- la figure 3E est une vue en coupe suivant la ligne IIIE-IIIE de la figure 3D ;
- la figure 3F est une vue de dessus de l'obturateur suivant la flèche IIIF de la figure 3E ;
- la figure 3G est une vue de dessus d'une variante d'obturateur ;
- la figure 3H est une vue en coupe suivant la ligne IIIH-IIIH de la figure 3G, d'une variante d'obturateur sans patte d'accrochage ;
- la figure 4A est une vue en coupe de côté d'une autre variante de l'obturateur de l'invention ;
- la figure 4B est une vue en coupe de côté d'encore une autre variante d'un obturateur de l'invention.
- la figure 5 est une photographie illustrant les résultats des tests de tenue en température d'une composition thermocollante n'entrant pas dans le cadre de l'invention ;
- la figure 6A est une photographie permettant de comparer un obturateur fabriqué avec une composition n'entrant pas dans le cadre de l'invention (échantillon 5B) avec un obturateur fabriqué avec une composition selon l'invention (échantillon 8B), après passage à l'étuve ;
- la figure 6B est une photographie permettant de comparer un obturateur fabriqué à partir d'une composition entrant dans le cadre de l'invention avant et après passage à l'étuve ;
- la figure 7 est une photographie prise de dessus d'un autre obturateur fabriqué à partir d'une autre composition entrant dans le cadre de l'invention et monté sur un support, avant passage et après passage en étuve ;
- la figure 8A est une vue schématique en élévation d'un appareil de test permettant de mesurer l'étanchéité à l'eau d'un obturateur testé en position verticale ;
- la figure 8B représente le même appareil de test pour mesurer l'étanchéité à l'eau d'un obturateur testé en position horizontale ;
- la figure 9 est une vue en élévation et en coupe d'un appareil de test de la résistance au décollement utilisé pour tester les obturateurs ;
- la figure 10A est une vue en plan schématique d'une éprouvette, avant passage en étuve, pour la détermination du retrait de la composition ;
- la figure 10B est une vue en plan schématique d'une éprouvette après passage en étuve, pour la mesure du retrait de la composition ;
- la figure 11A est une vue schématique de côté en coupe d'une éprouvette fabriquée à partir d'une composition thermocollante, montée au-dessus d'une ouverture sur un support métallique, avant passage en étuve ; et
- la figure 11B est une vue en coupe similaire à la figure 11A mais après passage en étuve, pour mesurer la flèche des échantillons testés.

Afin de mieux faire comprendre l'invention, on décrira tout d'abord les obturateurs de l'art antérieur.

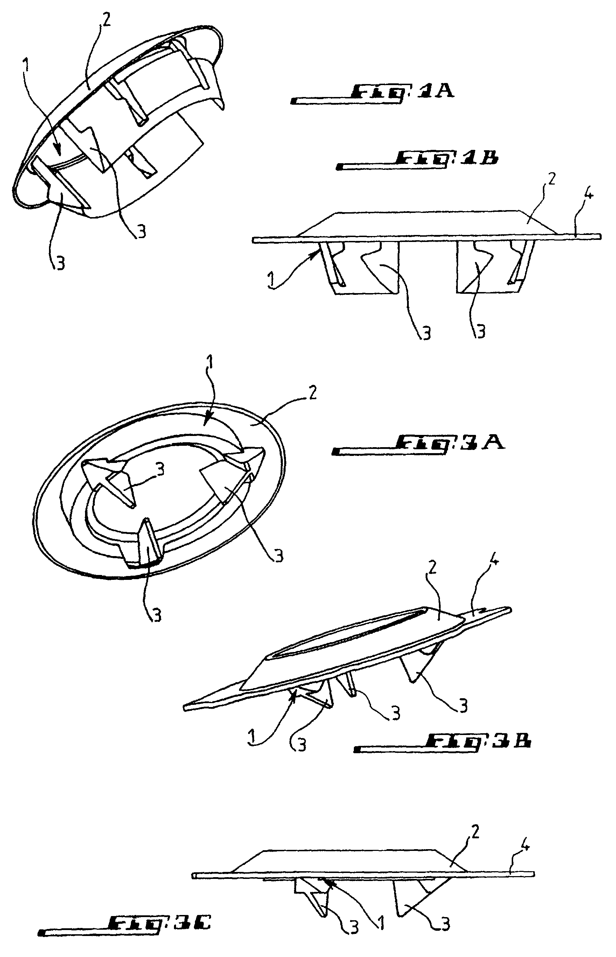

En se référant aux figures 1A et 1B, un exemple de réalisation d'un obturateur monomatière de l'art antérieur est constitué d'une seule et même matière plastique et comprend essentiellement une lèvre d'étanchéité 2, un corps 1 et des pattes d'accrochage 3. Le corps 1 a sensiblement le même diamètre que l'ouverture à obturer dans un support de préférence métallique, et les lèvres d'étanchéité 2, comme montré en figure 1B débordent sur le dessus du support métallique 4 alors que les pattes d'accrochage 3 vont maintenir le bouchon obturateur en place par accrochage à l'intérieur de l'ouverture et en dessous du support métallique 4.

Comme on l'a déjà dit, un tel obturateur qui n'est maintenu en place que par ses pattes d'accrochage ne présente qu'une très faible étanchéité à l'eau et aux poussières et aucune étanchéité à la pression. En effet, par une simple pression manuelle, le bouchon obturateur sort de l'ouverture à obturer.

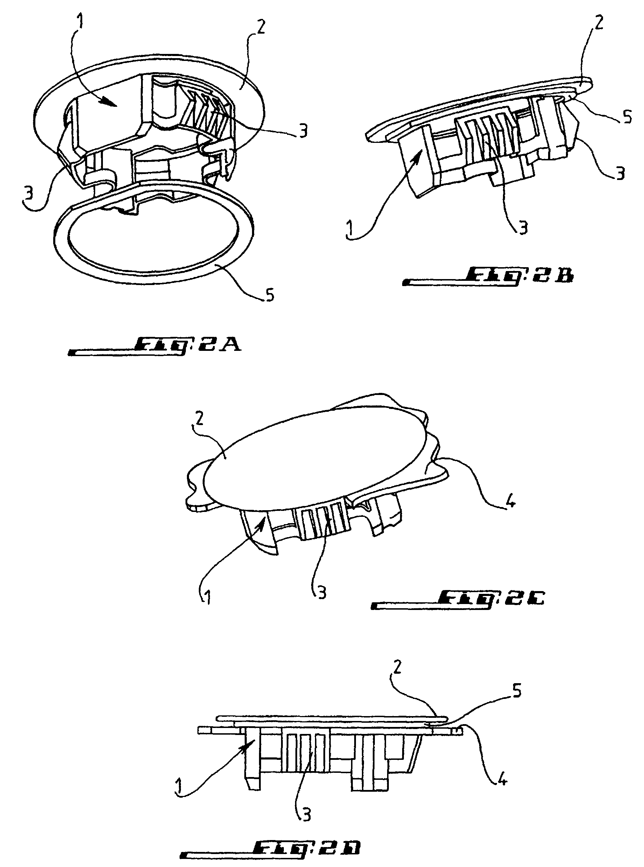

Pour résoudre ce problème d'étanchéité, un autre obturateur de l'art antérieur est tel que celui représenté aux figures 2A, 2B, 2C et 2D. Cet obturateur bi-composants comprend essentiellement un corps 1 en plastique ou en métal ayant sensiblement la forme et les dimensions de l'ouverture à obturer, des lèvres d'étanchéité 2 constituées de la même matière que le corps 1 et ayant des dimensions supérieures à l'ouverture à obturer et comprend des pattes d'accrochage 3 faites du même matériau que le corps 1 et les lèvres d'étanchéité 2.

Comme montré en figure 2A, cet obturateur de l'art antérieur comprend de plus un cordon de colle 5 représenté séparément en figure 2A et représenté en position monté sur l'obturateur en figure 2B. Ce bouchon obturateur avec le cordon de colle monté est ensuite placé sur l'ouverture du support métallique 4 à obturer avec les pattes d'accrochage s'insérant dans l'ouverture et maintenant l'obturateur en position par accrochage sur le dessous du support métallique 4. L'ensemble est ensuite passé dans une étuve à une température provoquant la fusion du cordon de colle qui durcit et adhère au support métallique et au corps de l'obturateur lors du refroidissement qui suit après sortie de l'étuve.

Le cordon de colle est généralement constitué d'un adhésif à fusion, également appelé dans l'art «hot melt» et qui est un adhésif à base d'un copolymère d'éthylène-acétate de vinyle (EVA) et de ses dérivés. Comme on l'a déjà dit également, l'étanchéité à l'eau, à la poussière et à la pression de cet obturateur est bonne mais son procédé de fabrication est complexe, pose des problèmes de reproductibilité et nécessite un appareillage spécifique.

Dans cet obturateur de l'art antérieur, le corps 1 peut être composé de métal ou d'une matière plastique.

Lorsque le corps 1 est en plastique, les matières généralement utilisées pour fabriquer ce corps sont de la série du polyamide 66 ou des alliages de polyamide et de polypropylène.

Il est à noter que le coût de fabrication de tels obturateurs bi-composants est élevé.

Par conséquent il existe dans l'art un besoin pour un obturateur constitué d'une matière qui puisse être moulée facilement en toute forme désirée, qui soit flexible de façon à être facilement insérée dans une ouverture à obturer, qui après passage en étuve adhère au support métallique dont une ouverture est à obturer, et sans présenter de déformations à chaud trop importantes et qui adhère à tout type de support, en particulier métallique.

Autrement dit, l'invention vise à fournir une composition thermocollante :

- qui soit facile à mettre en oeuvre et en forme,
- qui subisse sans aucune altération chimique une première étape de chauffage de 15 à 30 minutes à 140°C et une seconde étape de chauffage de 30 à 45 minutes à 195°C, qui sont les couples temps/températures minimaux et maximaux atteints dans les étuves actuellement utilisées dans l'industrie pour réaliser l'adhésion du bouchon obturateur sur les supports métalliques,
- qui adhère à tout type de support, en particulier métallique après ces cycles de chauffage,
- qui soit facile à mouler,
- qui ne se déforme pas ou peu après avoir subi un ou plusieurs passages en étuve aux températures et pendant les temps définis ci-dessus, et
- qui après les passages en étuve tels que définis ci-dessus, après avoir été placé au-dessus d'un orifice à obturer, adhère au support, et ne subisse pas de déformations et qui soit étanche à l'eau pendant au moins 1 heure sous une pression minimale de 0,1 bar.

De plus, cette composition thermocollante, une fois moulée en un obturateur et collée sur le support, ne doit pas perdre ses qualités d'adhésion, d'étanchéité à l'eau et à la pression et garder sa forme, même si la température à laquelle est soumis cet obturateur varie de -40°C à +80°C, ce qui représente les conditions d'utilisation envisagées des pièces métalliques comportant les obturateurs de l'invention.

La composition thermocollante selon l'invention est constituée de deux composants, à savoir un mélange adhésif caractérisé par une température de fusion inférieure à la température minimale des étuves utilisées actuellement, c'est-à-dire 140°C et un second composant dit «matière d'armature» caractérisé par un point de fusion supérieur à la température maximale atteignable actuellement dans une étuve, c'est-à-dire 195°C. Le mélange adhésif permettra de coller le bouchon obturateur réalisé à partir de la composition thermocollante de l'invention sur le support métallique comprenant l'ouverture à obturer, afin de maintenir en place l'obturateur et d'assurer l'étanchéité voulue à l'eau, à la poussière et à la pression alors que la matière d'armature permettra de maintenir sensiblement la forme et les dimensions du bouchon obturateur réalisé avec la composition thermocollante de l'invention, pendant l'opération de fusion de l'adhésif et donc de collage du bouchon obturateur sur le support métallique.

Après de nombreux essais sur différentes compositions du type comprenant un adhésif et d'une matière formant armature, on a découvert qu'une composition thermocollante comprenant :

- en tant que mélange adhésif soit un copolymère d'éthylène-acétate de vinyle (EVA)-anhydride maléique éventuellement de plus modifié avec du polyéthlène et/ou polypropylène soit un copolymère d'éthylène-acétate de vinyle modifié pour avoir des fonctions époxy et,
- en tant que composant d'armature soit un polyéther bloc amide (PEBA) optionnellement modifié par un copolymère d'éthylène-propylène et/ou un terpolymère d'éthylène propylène diène (EPDM), soit un polyéther bloc ester (COPE),

permettait d'obtenir un obturateur ayant toutes les propriétés requises décrites ci-dessus.

Dans la composition de l'invention, le mélange adhésif utilisé est le copolymère d'éthylène-acétate de vinyle-anhydride maléique obtenu soit par polymérisation directe des monomères de départ soit par greffage de la quantité voulue d'anhydride maléique sur le copolymère d'éthylène-acétate de vinyle.

De plus, ce polymère peut être optionnellement modifié avec du polyéthylène ou du polypropylène, eux-mêmes éventuellement greffés anhydride maléique.

Pour démontrer les propriétés supérieures de la composition de l'invention par rapport à des compositions n'entrant pas dans le cadre de l'invention, différents tests ont été effectués.

Ainsi, différentes compositions comprenant différents adhésifs et différents matériaux d'armature tels que montrés au Tableau 1 ci-après ont tout d'abord été testées quant à la déformation à chaud. Ces tests ont été réalisés sur des plaquettes rectangulaires de dimensions, avant test, de 50 mm x 40 mm et d'une épaisseur de 2,0 mm. Tout d'abord, ces plaquettes ont été placées sur une plaque métallique percée. Le trou de la plaque métallique est un oblong de 20 mm x 40 mm, comme montré sur la figure 5.

Des éprouvettes ayant chacune des compositions montrées au Tableau 1 ont été placées chacune sur une plaque percée et passées dans une étuve tout d'abord à basse température c'est-à-dire à 140°C pendant 30 minutes, puis à haute température c'est-à-dire à 195°C pendant 30 minutes qui sont les couples temps/température choisis comme représentatifs de ceux utilisés actuellement.

On a alors évalué visuellement :

1) Si après chacun ces cycles de traitement thermique, la composition garde une viscosité suffisante pour ne pas s'écouler à travers la plaque percée ;
2) Si l'adhésion au support métallique constitué par la plaque percée est suffisante ;
3) Si le retrait est acceptable pour la fonction d'obturation voulue (étanchéité maintenue) ;
4) Si la flèche de l'éprouvette au travers du trou est acceptable.

La figure 5 est une photographie des résultats de ces tests effectués sur des échantillons dont la composition n'entre pas dans le cadre de l'invention.

Ainsi, on peut constater que ces compositions n'entrant pas dans le cadre de l'invention ne permettent pas d'obtenir lors d'un passage en étuve à 195°C pendant 30 minutes, la fonction d'obturation voulue puisque tous les échantillons ont fondu et sont passés au travers de l'oblong de la plaque percée.

Le rapport en poids de l'adhésif au composant d'armature était pour chacun de ces échantillons de 25 :75.

Les différents adhésifs testés sont :

A : Copolymère d'éthylène-acétate de vinyle, noté EVA dans le Tableau 1.

B : Copolymère d'éthylène-acétate de vinyle greffé anhydride maléique, noté B dans le Tableau 1. Cet adhésif est celui sélectionné dans l'invention, car c'est celui avec lequel les meilleurs résultats sont obtenus lorsqu'utilisé avec les compositions d'armature sélectionnées dans l'invention, comme prouvé par les résultats des différents tests qui seront explicités dans ce qui suit.

C : Copolymère d'éthylène-ester acrylique.

D : Terpolymère d'éthylène-ester acrylique-anhydride maléique.

Différents composants d'armature ont également été testés en mélange avec chacun des additifs ci-dessus. Ces composants d'armature sont les suivants :

1 : Polyamide 6, noté PA 6 dans le Tableau 1.

2. Polyamide 66, noté PA 66 dans le Tableau 1.

3. Polyamide 11, noté PA11 dans le Tableau 1.

4. Polyéther bloc amide, noté PEBA dans le Tableau 1. C'est un des composants d'armature sélectionné dans la composition de l'invention.

5. Alliage de polyamide et de polypropylène noté alliage PA/PP dans le Tableau 1.

6. Polyoxyméthylène noté POM dans le Tableau 1.

7. Mélange de propylène et d'un terpolymène d'éthylène propylène diène, noté PP/EPDM dans le Tableau 1.

8. Polyéther bloc ester noté COPE dans le Tableau 1. Ce composant d'armature est un de ceux sélectionnés pour la composition de l'invention.

9. Terpolymère d'acrylonitrile-butadiène-styrène, noté ABS dans le Tableau 1.

Chacune des compositions testées a été référencée par un chiffre suivi d'une lettre majuscule. Le chiffre correspond à la nature du composant d'armature tel qu'identifié ci-dessus et la lettre majuscule correspond à l'adhésif tel qu'identifié ci-dessus.

Ainsi, l'échantillon 1A est un échantillon préparé à partir d'une composition comprenant 75 % en poids d'un copolymère d'éthylène-acétate de vinyle et 25 % en poids de polyamide 6 et l'échantillon 4D correspond à une composition comprenant 75 % en poids d'un copolymère d'éthylène-acétate de vinyle greffé anhydride maléique en tant qu'adhésif et 25 % en poids de polyéther bloc amide en tant que composant d'armature.

Ces références sont utilisées tout au long de la description qui suit et dans les tableaux qui suivent et représentent toujours les mêmes compositions.

Le Tableau 1 ci-après montre chacune des compositions ainsi testées.

**TABLEAU 1**

| Adhésif<br>armature | | EVA<br>A | EVA modifié<br>anhydride<br>maléique, B | Copolymère<br>éthylène-ester<br>acrylique, C | Terpolymère éthylène-ester<br>acrylique-anhydride<br>maléique, D |
|---|---|---|---|---|---|
| PA 6 | 1 | 1A | 1B | 1C | 1D |
| PA 66 | 2 | 2A | 2B | 2C | 2D |
| PA 11 | 3 | 3A | 3B | 3C | 3D |
| PEBA | 4 | 4A | 4B | 4C | 4D |
| Alliage PA/PP | 5 | 5A | 5B | 5C | 5D |
| POM | 6 | 6A | 6B | 6C | 6D |
| PP/EPDM | 7 | 7A | 7B | 7C | 7D |
| COPE | 8 | 8A | 8B | 8C | 8D |
| ABS | 9 | 9A | 9B | 9C | 9D |

Les résultats des observations visuelles effectuées sur chacun des échantillons montrés au Tableau 1 après passage à l'étuve 30 minutes à 140°C, puis passage 30 minutes à 195°C sont regroupés au Tableau 2 ci-après.

EP 1 114 113 B1

TABLEAU 2

| Echantil- lon | après 30 minutes à 140°C | | | | | après 30 minutes à 195°C | | | | |
|---|---|---|---|---|---|---|---|---|---|---|
| | Passage au travers de la plaquette | Adhésion | Retrait | Flèche | Autres observations | Passage au travers de la plaquette | Adhésion | Retrait | Flèche | Autres observations |
| 1A | non | mauvaise | moyen | non mesurée | pas étanche | non | bonne | faible | accep- table | jaunit |
| 1B | non | acceptable | moyen | | | non | bonne | faible | " | jaunit |
| 1C | non | acceptable | moyen | non mesurée | | non | bonne | faible | " | jaunit |
| 1D | non | mauvaise | fort | non mesurée | pas étanche | non | bonne | fort | " | jaunit |
| 2A | non | acceptable | faible | non mesurée | | non | bonne | faible | " | |
| 2B | non | acceptable | fort | non mesurée | | non | bonne | fort | " | |
| 2C | non | acceptable | faible | non mesurée | | non | bonne | faible | " | |

## TABLEAU 2 (SUITE 1)

| Echantil-lon | après 30 minutes à 140°C | | | | | | après 30 minutes à 195°C | | | | |
|---|---|---|---|---|---|---|---|---|---|---|---|
| | Passage au travers de la plaquette | Adhésion | Retrait | Flèche | Autres observations | | Passage au travers de la plaquette | Adhésion | Retrait | Flèche | Autres observations |
| 2D | non | acceptable | moyen | non mesurée | | | non | bonne | fort | | |
| 3A | non | acceptable | faible | non mesurée | | | oui | n o n | m e s u | r a b l e s | |
| 3B | non | acceptable | faible | non mesurée | | | oui | n o n | m e s u | r a b l e s | |
| 3C | non | acceptable | faible | non mesurée | | | oui | n o n | m e s u | r a b l e s | |
| 3D | non | acceptable | faible | non mesurée | | | oui | n o n | m e s u | r a b l e s | |

EP 1 114 113 B1

## TABLEAU 2 (SUITE 2)

| Echantil-lon | après 30 minutes à 140°C | | | | | après 30 minutes à 195°C | | | | |
|---|---|---|---|---|---|---|---|---|---|---|
| | Passage au travers de la plaquette | Adhésion | Retrait | Flèche | Autres observations | Passage au travers de la plaquette | Adhésion | Retrait | Flèche | Autres observations |
| 4A | non | acceptable | fort | | pas de changement de couleur | non | bonne | très faible | impor-tante | couleur jaune |
| 4B | non | acceptable | faible | | pas de changement de couleur | non | bonne | faible | accep-table | couleur jaune |
| 4C | non | acceptable | faible | | pas de changement de couleur | non | bonne | faible | accep-table | couleur jaune |
| 4D | non | acceptable | fort | | pas de changement de couleur | non | bonne | fort | faible | couleur jaune |
| 5A | non | acceptable | faible | accep-table | pas de changement de couleur | non | bonne | faible | accep-table | rosé |

EP 1 114 113 B1

TABLEAU 2 (SUITE 3)

| Echantil-lon | après 30 minutes à 140°C | | | | | après 30 minutes à 195°C | | | | |
|---|---|---|---|---|---|---|---|---|---|---|
| | Passage au travers de la plaquette | Adhésion | Retrait | Flèche | Autres observations | Passage au travers de la plaquette | Adhésion | Retrait | Flèche | Autres observations |
| 5B | non | acceptable | faible | acceptable | pas de changement de couleur | non | bonne | faible | impor-tante | rosé |
| 5C | non | acceptable | fort | impor-tante | pas de changement de couleur | non | bonne | fort | impor-tante | rosé |
| 5D | non | acceptable | fort | importante | pas de changement de couleur | non | bonne | moyen | faible | rosé |
| 6A | non | acceptable | aucun | nulle | | oui | n o n | m e s u | r a b l e s | |
| 6B | non | acceptable | aucun | nulle | | oui | n o n | m e s u | r a b l e s | |
| 6C | non | acceptable | aucun | nulle | | oui | n o n | m e s u | r a b l e s | |

TABLEAU 2 (SUITE 4)

| Echantillon | après 30 minutes à 140°C | | | | | après 30 minutes à 195°C | | | | |
| | Passage au travers de la plaquette | Adhésion | Retrait | Flèche | Autres observations | Passage au travers de la plaquette | Adhésion | Retrait | Flèche | Autres observations |
|---|---|---|---|---|---|---|---|---|---|---|
| 6D | non | acceptable | aucun | nulle | | oui | n o n | m e s u | r a b l e s | |
| 7A | oui | | | | | oui | n o n | m e s u | r é | |
| 7B | non | acceptable | moyen | impor-tante | | oui | n o n | m e s u | r é | |
| 7C | oui | | | | | oui | n o n | m e s u | r é | |
| 7D | oui | | | " | | oui | n o n | m e s u | r é | |
| 8A | non | nulle | | | | non | accep-table | très faible | nulle | |
| 8B | non | acceptable | très faible | nulle | | non | accep-table | très faible | nulle | |

EP 1 114 113 B1

TABLEAU 2 (SUITE 5)

| Echantillon | après 30 minutes à 140°C | | | | | après 30 minutes à 195°C | | | | |
|---|---|---|---|---|---|---|---|---|---|---|
| | Passage au travers de la plaquette | Adhésion | Retrait | Flèche | Autres observations | Passage au travers de la plaquette | Adhésion | Retrait | Flèche | Autres observations |
| 8C | non | nulle | très faible | nulle | | non | acceptable | très faible | nulle | |
| 8D | non | acceptable | très faible | nulle | | non | acceptable | très faible | nulle | |
| 9A | non | acceptable | moyen | très importante | | oui | n o n | m e s u r é | | |
| 9B | non | acceptable | fort | moyenne | | oui | n o n | m e s u r é | | |
| 9C | non | acceptable | fort | moyenne | | oui | n o n | m e s u r é | | |
| 9D | non | aceptable | fort | moyenne | | oui | n o n | m e s u r é | | |

EP 1 114 113 B1

Comme on peut le voir à partir du Tableau 2, les compositions dans lesquelles le matériau d'armature est du polyamide 11, un mélange de polypropylène et d'un terpolymère d'éthylène-propylène-diène ou de l'acrylonitrile-butadiène-styrène ne sont pas utilisables car elles fondent lors du passage à l'étuve soit à basse, soit à haute température.

Les mesures de retrait n'ont donc été effectuées que sur les échantillons restants c'est-à-dire les échantillons dans lesquels l'armature était soit du PA 6 (série 1A à 1D), soit du PA 66 (série 2A à 2D) soit du PEBA (série 4A à 4D), soit un mélange de polyamide et de polypropylène (série 5A à 5D) soit du COPE (série 8A à 8D).

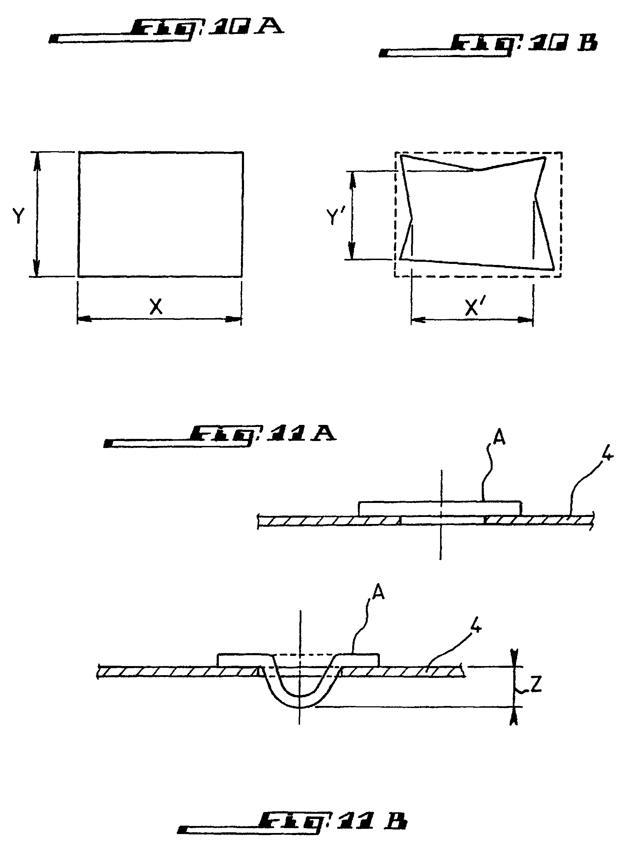

Sur ces échantillons, on mesure en réalité le post-retrait comme montré aux figures 10A et 10B. Le post-retrait est la différence entre les dimensions de la pièce injectée refroidie à température ambiante et les dimensions de cette pièce après un recuit à une température donnée pendant un certain temps. Ici, les plaquettes moulées mesurent 50 mm x 40 mm et ont une épaisseur de 2 mm ce qui signifie que sur la figure 10A, Y = 40 mm et X = 50 mm. En mesurant ensuite les dimensions Y' et X' comme indiqué en figure 10B, le retrait est représenté par la formule :

$$\text{retrait} = \Delta X = X - X' \text{ et } \Delta Y = Y - Y'.$$

Les mesures de retrait sont effectuées uniquement sur les plaquettes ayant subi le cycle appelé haute température c'est-à-dire un chauffage en étuve de 30 mn à 195°C car c'est pendant ce cycle que l'on enregistre les déformations les plus importantes.

Les résultats de ces mesures de retrait sont reportés ci-après dans le Tableau 3.

Les mesures du retrait n'ont pas été effectuées sur les échantillons dont le composant formant armature était du polyamide 11 (série 3A à 3D) car les plaquettes ont coulé au travers du poinçonnage. Elles n'ont pas été effectuées non plus sur les plaquettes dont l'armature était du POM car ces plaquettes ont coulé au travers du poinçonnage. De la même façon, ces mesures n'ont pas été effectuées lorsque l'armature était un mélange de polypropylène et d'un terpolymère d'éthylène-propylène-diène, pour les mêmes raisons. Egalement, ces mesures n'ont pas été effectuées sur les échantillons dans lesquels l'armature était de l'acytonitrile-butadiène styrène, pour les mêmes raisons.

Les résultats des mesures de retrait obtenus sur les échantillons restants après passage à l'étuve 30 mn à 195°C sont reportés au Tableau 3 ci-après.

TABLEAU 3

| ARMATURE : PA 6 | | | | | |
|---|---|---|---|---|---|
| | X' en mm | Y' en mm | $\Delta X$ en mm | $\Delta Y$ en mm | Som$\Delta$ en mm |
| 1A | 39,40 | 49,22 | 0,60 | 0,78 | 1,38 |
| 1B | 39,40 | 49,05 | 0,60 | 0,95 | 1,55 |
| 1C | 37,75 | 48,65 | 2,25 | 1,35 | 3,60 |
| 1D | 31,41 | 41,22 | 8,59 | 8,78 | 17,37 |
| ARMATURE : PA 66 | | | | | |
| | X' en mm | Y' en mm | $\Delta X$ en mm | $\Delta Y$en mm | Som$\Delta$ en mm |
| 2A | 40,00 | 49,40 | 0,00 | 0,60 | 0,60 |
| 2B | 38,73 | 48,34 | 1,27 | 1,66 | 2,93 |
| 2C | 39,80 | 47,82 | 0,2 | 2,18 | 2,38 |
| 2D | 34,12 | 42,32 | 5,88 | 7,68 | 13,56 |
| ARMATURE : PEBA | | | | | |
| | X' en mm | Y' en mm | $\Delta X$ en mm | $\Delta Y$ en mm | Som$\Delta$ en mm |
| 4A | 37,90 | 48,17 | 2,10 | 1,83 | 3,93 |
| 4B | 39,55 | 49,84 | 0,45 | 0,16 | 0,61 |
| 4C | 35,23 | 43,94 | 4,77 | 6,06 | 10,83 |
| 4D | 33,02 | 41,00 | 6,98 | 9,00 | 15,98 |

TABLEAU 3   (suite)

| ARMATURE : alliage PA/PP | | | | | |
|---|---|---|---|---|---|
| | X' en mm | Y' en mm | ΔX en mm | ΔY en mm | SomΔ en mm |
| 5A | 35,42 | 46,41 | 4,58 | 3,59 | 8,17 |
| 5B | 35,02 | 44,18 | 4,95 | 5,82 | 10,77 |
| 5C | 31,18 | 41,02 | 8,82 | 8,98 | 17,80 |
| 5D | 34,40 | 44,23 | 5,60 | 5,77 | 11,37 |
| ARMATURE : COPE (polyéther bloc ester) | | | | | |
| | X' en mm | Y' en mm | ΔX en mm | ΔY en mm | SomΔ en mm |
| 8A | 36,26 | 47,95 | 3,74 | 2,05 | 5,79 |
| 8B | 35,09 | 43,52 | 4,91 | 6,48 | 11,39 |
| 8C | 35,72 | 44,63 | 4,28 | 5,37 | 9,65 |
| 8D | 35,87 | 45,55 | 4,13 | 4,45 | 8,58 |

Des mesures de la flèche ont également été effectuées sur ces mêmes échantillons.

La flèche a été mesurée comme montré aux figures 11A et 11B.

Ainsi une éprouvette échantillon notée A fabriquée à partir d'une des compositions testées est placée sur un support métallique 4 et l'ensemble est passé à l'étuve. La figure 11A montre l'éprouvette A sur le support 4 avant passage à l'étuve et la figure 11B montre la même éprouvette A sur le support 4, après passage à l'étuve.

La flèche correspond à la valeur Z représentée en figure 11B.

Les résultats, en mm, de cette mesure de flèche, sur les échantillons sont reportés au Tableau 4 ci-après dans lequel «B.T.» signifie un passage à l'étuve à basse température c'est-à-dire 30 mn à 140°C, «H.T.» signifie passage à l'étuve à haute température c'est-à-dire 30 mn à 195°C, «+ flèche» représente la somme des flèches «B. T.» et «H.T.», et «+ famille» signifie la somme des «+ flèche» par famille d'armature.

TABLEAU 4

| ARMATURE : PA 6 | | | | |
|---|---|---|---|---|
| | B.T. | H.T. | «+ flèche » | «+ famille » |
| 1A | 0,51 | 0,69 | 1,20 | |
| 1B | 1,26 | 2,91 | 4,17 | 11,09 |
| 1C | 0,00 | 1,63 | 1,63 | |
| 1D | 2,02 | 2,07 | 4,09 | |
| ARMATURE : PA 66 | | | | |
| | B.T. | H.T. | «+ flèche » | «+ famille » |
| 2A | 0,72 | 1,06 | 1,78 | |
| 2B | 3,15 | 6,64 | 9,79 | 23,03 |
| 2C | 1,01 | 1,21 | 2,22 | |
| 2D | 3,37 | 5,87 | 9,24 | |
| ARMATURE : PEBA | | | | |
| | B.T. | H.T. | «+ flèche » | «+ famille » |
| 4A | 2,53 | 0,51 | 3,04 | |
| 4B | 0,00 | 1,26 | 1,26 | 6,92 |
| 4C | 0,00 | 0,00 | 0,00 | |
| 4D | 0,6 | 2,02 | 2,62 | |

TABLEAU 4  (suite)

| ARMATURE : alliage PA/PP | | | | |
|---|---|---|---|---|
| | B.T. | H.T. | «+ flèche » | «+ famille » |
| 5A | 0,87 | 3,82 | 4,69 | |
| 5B | 0,56 | 2,1 | 2,66 | 20,92 |
| 5C | 2,98 | 3,59 | 6,57 | |
| 5D | 4,86 | 2,14 | 7,00 | |
| ARMATURE COPE (polyéther bloc ester) | | | | |
| | B.T. | H.T. | «+ flèche » | «+ famille » |
| 8A | 0,00 | 0,56 | 0,56 | |
| 8B | 0,00 | 0,00 | 0,00 | 0,56 |
| 8C | 0,00 | 0,00 | 0,00 | |
| 8D | 0,00 | 0,00 | 0,00 | |

On peut voir à partir des résultats des Tableaux 3 et 4 que seules les compositions dans lesquelles l'armature est soit du PEBA (polyéther bloc amide) ou du COPE (polyéther bloc ester) présentent les qualités requises en termes à la fois de retrait et de flèche c'est-à-dire en termes de déformations à chaud.

Cependant, dans la famille dans laquelle l'armature est du PEBA, lorsque l'adhésif est un copolymère d'éthylène-acétate de vinyle, la flèche est trop importante. De la même façon, lorsque l'adhésif est un terpolymère d'éthylène-ester acrylique-anhydride maléïque, le retrait est trop important pour être satisfaisant.

Egalement, on voit à partir des Tableaux 1 à 4 qui précèdent qu'avec les compositions dans lesquelles l'armature est du COPE et l'adhésif un copolymère d'acétate de vinyle ou un copolymère d'éthylène-ester acrylique, il n'y a pas d'adhésion à un support métallique.

En conclusion, les seules compositions présentant les propriétés requises en termes de tenue en température, retrait, adhésion et flèche sont les échantillons dont les compositions sont les compositions suivantes : 4B, 4C, 8B et 8D, c'est-à-dire des compositions comprenant en tant qu'adhésif un copolymère d'éthylène-acétate de vinyle greffé anhydride maléique ou un copolymère d'éthylène-ester acrylique ou un terpoiymère d'éthylène-ester acrylique anhydride maléique et, en tant que composant d'armature, soit un polyéther bloc ester (COPE) soit un polyéther bloc amide (PEBA).

Cependant, pour être utilisables pour la fabrication d'un bouchon obturateur de l'invention, ces compositions doivent également avoir les propriétés additionnelles et indispensables suivantes : aptitude au moulage en une forme quelconque, étanchéité à l'eau et à la pression et conservation de toutes les propriétés ci-dessus dans un intervalle de température de -40° à +80°C.

Les quatre compositions 4B, 4C, 8B et 8D pouvaient être moulées par des méthodes connues dans l'art mais seules les compositions 4B et 8B présentaient une déformation à chaud acceptable lorsque moulées en des obturateurs.

Le test suivant a donc été réalisé pour attester de la supériorité de ces compositions 4B et 8B. Ainsi, ces obturateurs ont été obtenus par moulage à un diamètre d'obturation de 40 mm. Un obturateur fabriqué à partir de chacune des compositions 4C, 4D, 8B et 8D a été réalisé.

Ces obturateurs échantillons ont été placés sur des plaques métalliques représentatives des supports métalliques sur lesquels ils seront de préférence appliqués. Ces supports métalliques peuvent avoir subi ou non un traitement de surface, par exemple anti-corrosion, comme un revêtement de cataphorèse.

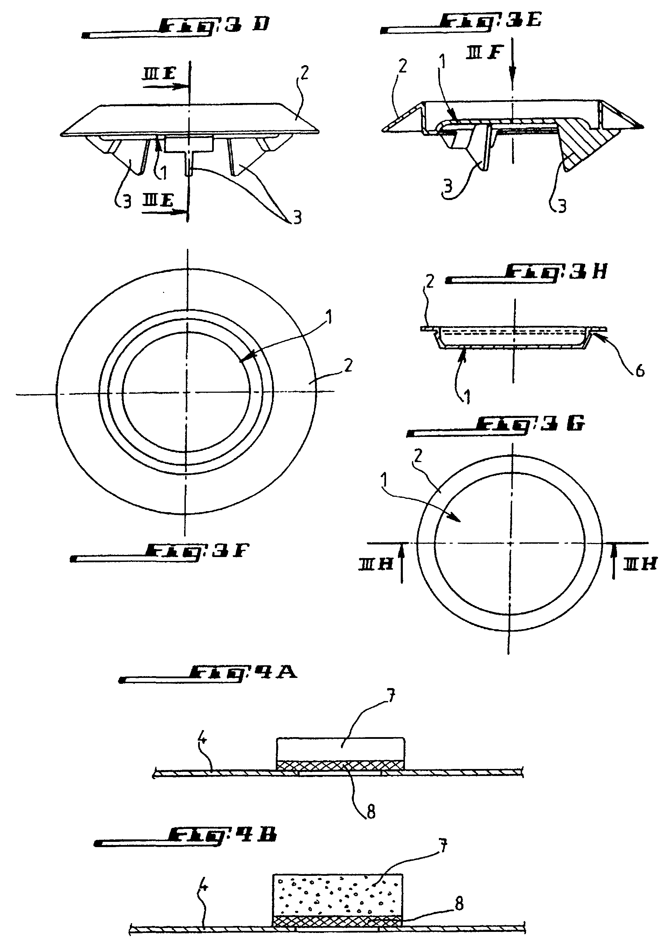

Comme on le voit en figure 3D, un tel obturateur mono-matière est un obturateur comportant des pattes d'accrochage 3 et des lèvres d'étanchéité 2.

Sur la figure 3E, qui est une vue en coupe selon l'axe IIIE-IIIE de la figure 3D, on peut également voir le corps 1 qui est fait de la même matière que les pattes d'accrochage 3 et les lèvres d'étanchéité 2.

La figure 3F représente une vue de dessus de l'obturateur représenté en figure 3D et 3E.

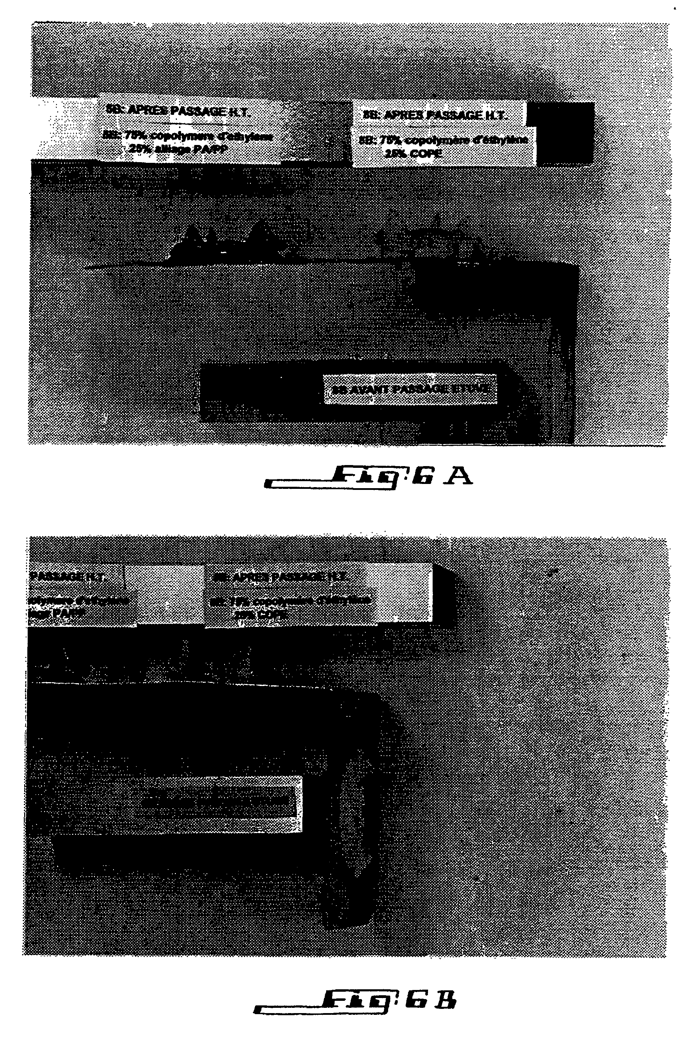

La figure 6B, montre l'obturateur fabriqué à partir de la composition 8B monté sur une plaque percée c'est-à-dire avant passage à l'étuve alors que la figure 6A montre ce même obturateur après passage à l'étuve. Comme on peut le voir, la déformation et le changement de couleur sont faibles.

En comparaison, un échantillon de la composition 5D est également montré sur la figure 6A. Cet échantillon présente une forte déformation et un fort changement de couleur.

Ensuite, chacun des quatre échantillons cités ci-dessus a été placé sur une plaque percée ronde comme montré en figure 7 sous la dénomination «pièce avant passage en étuve».

Chacun de ces échantillons a ensuite été passé à l'étuve à haute température c'est-à-dire 30 mn à 195°C.

Comme on le voit en figure 7, l'échantillon 4B présente peu de déformation après un tel cycle de température.

Chacun des échantillons 4B, 4C, 8B et 8D a été traité de la même façon et après refroidissement, les flèches sur chacun de ces échantillons ont été mesurées.

Les résultats de ces mesures sont reportés au Tableau 5 ci-après.

TABLEAU 5

| ECHANTILLON | FLECHE |
|---|---|
| 4B | 0,00 mm |
| 4C | 11,32 mm |
| 8D | 12,09 mm |
| 8D | 9,36 mm |

Un essai d'étanchéité à l'eau est ensuite réalisé sur chacun de ces échantillons passé en étuve à haute température.

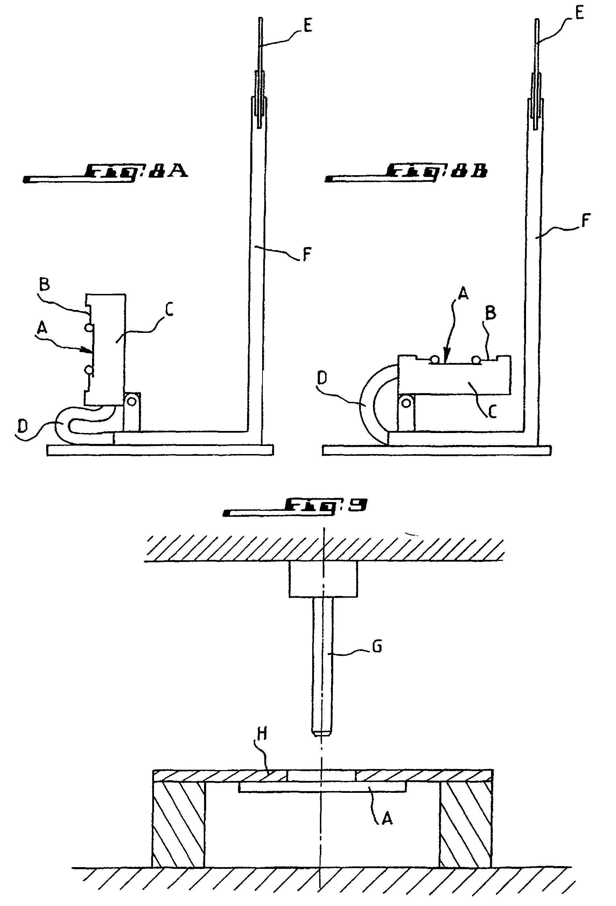

Cet essai d'étanchéité à l'eau a été réalisé comme montré en figures 8A et 8B c'est-à-dire d'abord avec l'obturateur en position verticale puis avec l'obturateur en position horizontale.

Dans ce test on soumet, en position verticale puis en position horizontale, l'obturateur noté A aux figures 8A et 8B, à une pression hydrostatique de 0,1 bar pendant 1 heure afin d'observer l'existence éventuelle de fuites.

Sur les figures 8A et 8B, l'obturateur monté sur le support est noté A, le support est noté B, la cuve contenant l'eau et permettant d'appliquer une pression hydrostatique de 0,1 bar est notée C. La référence D représente un raccord flexible amenant l'eau dans la cuve C, la référence E représente un tube en verre et la référence F représente une colonne d'eau de 100 cm de hauteur permettant d'obtenir la pression de 0,1 bar dans la cuve C.

Pour être utilisable pour les buts de l'invention, l'obturateur ne doit pas présenter de fuite après avoir été exposé pendant 1 heure au minimum sous une pression hydrostatique de 0,1 bar.

Seuls les échantillons 4B et 8B c'est-à-dire fabriqués à partir des compositions de l'invention ont passé avec succès ce test.

Enfin, comme on l'a dit au départ, il faut que l'obturateur selon l'invention adhère à son support, de préférence métallique.

Dans ce but, et pour démontrer encore la supériorité de la composition de l'invention, les résistances au décollement d'obturateurs obtenus à partir des compositions 4B et 8B selon l'invention et celles d'obturateurs obtenus à partir de compositions n'entrant pas dans le cadre de l'invention ont été mesurées, après passage en étuve à haute température de ces obturateurs montés sur une plaque métallique. Ces tests sont effectués à température ambiante sur l'appareil montré en figure 9.

Comme représenté en figure 9, une tige cylindrique de poinçonnement G d'un diamètre de 10 mm est fixée à l'un des plateaux de la machine de compression de manière que l'axe de la tige soit perpendiculaire au plan des obturateurs A constitués des différentes compositions testées.

L'obturateur est une plaque de 50 mm x 40 mm, d'une épaisseur de 2 mm ayant subi un cycle en étuve soit à basse température soit à haute température.

L'obturateur est maintenu par le porte-éprouvette noté H en figure 9. Il s'agit d'une plaque en acier comportant un poinçonnage oblong de 40 mm x 20 mm. L'épaisseur du porte éprouvette est de 1 mm.

On mesure la force nécessaire pour décoller l'obturateur A du porte-éprouvette H.

Ces essais ont été effectués sur chacun des échantillons de la série 1A à 1D, de la série 2A à 2D, de la série 4A à 4D, de la série 5A à 5D et de la série 8A à 8D.

Les résultats de ces tests sont reportés au Tableau 6 ci-après.

Dans ce Tableau «B.T» signifie un cycle thermique en étuve à basse température c'est-à-dire 30 mn à 140°C et «H.T.» signifie un cycle à haute température dans l'étuve c'est-à-dire un passage de 30 minutes à 195°C et la valeur numérique reportée représente la force nécessaire pour décoller l'obturateur A.

TABLEAU 6

| ECHANTILLON | FORCE APRES B.T. | FORCE APRES H.T. |
|---|---|---|
| 1A | --- | 6,5 daN |
| 1B | 30 daN | 45 daN |

TABLEAU 6   (suite)

| ECHANTILLON | FORCE APRES B.T. | FORCE APRES H.T. |
|---|---|---|
| 1C | 1 daN | 5 daN |
| 1D | --- | 10 daN |
| | | |
| 2A | 3,5 daN | 8,5 daN |
| 2B | >40 daN | >40 daN |
| 2C | 1,5 daN | 3 daN |
| 2D | 5 daN | 9 daN |
| | | |
| 4A | 3 daN | 9 daN |
| 4B | 5,5 daN | 15 daN |
| 4C | 0,5 daN | 6 daN |
| 4D | 6,5 daN | 13 daN |
| | | |
| 5A | 12 daN | 20 daN |
| 5B | 13 daN | 25 daN |
| 5C | 11 daN | 4 daN |
| 5D | 4 daN | 4,5 daN |
| | | |
| 8A | --- | 3,5 daN |
| 8B | 14 daN | 24 daN |
| 8C | --- | 4 daN |
| 8D | 8 daN | 20 daN |

On voit à partir des résultats reportés au Tableau 6 pris en combinaison avec les résultats reportés au Tableaux 1 à 5 que les compositions 4B et 8B sont les seules possédant toutes les propriétés requises. La déformation à chaud (retrait, flèche) étant un critère très important, la composition préférée de l'invention est la composition 4B.

L'échantillon 4B correspond à une composition comprenant 75 % en poids d'un composant adhésif qui est un polymère d'éthylène-acétate de vinyle greffé anhydride maléique, comprenant 14 % en poids d'unités acétate de vinyle,entre 0,5 % et 1 % en poids d'anhydride maléique, le reste étant de l'éthylène, et 25 % en poids d'un polyéther bloc amide dont les blocs amide sont du Nylon® 6, c'est-à-dire du polyamide 6 obtenu par condensation d'ε-caprolactame, et dont les segments éther sont à base d'éthylène glycol avec un peu de propylène glycol.

L'échantillon 8B correspond à un obturateur fabriqué à partir d'une composition contenant 75 % en poids d'un adhésif qui est le même polymère d'éthylène-acétate de vinyle greffé anhydride maléique que ci-dessus, et 25 % en poids d'un composant d'armature qui est un polyéther bloc ester dont la partie ester est constituée de polybutylène téréphtalate et dont la partie éther est constituée de motifs éthylène glycol.

Dans cette composition, le composant adhésif a une température de fusion de 95°C et le composant formant armature a une température de fusion de 207°C.

Ainsi,cette composition commençait à présenter une adhésion acceptable dés un passage en étuve à 100°C mais au détriment d'un allongement du temps de séjour à 1h. De la même façon, le bouchon obturateur fait à partir de cette composition gardait sa forme après un passage en étuve à 200°C pendant 15 mn.

Des essais ont été réalisés également avec une composition contenant toujours en tant qu'adhésif le même polymère d'éthylène-acétate de vinyle greffé anhydride maléique et où le composant d'armature était le même polyéther bloc amide que dans la composition 4B mais modifié par un copolymère d'éthylène-propylène.

L'essai a également été réalisé avec en tant qu'adhésif le même polymère d'éthylène-acétate de vinyle greffé anhydride maléique et le polyéther bloc amide utilisé pour l'échantillon 4B mais en mélange avec un terpolymère d'éthylène-propylène diène. Les résultats étaient également excellents.

De la même façon, des essais ont été réalisés avec en tant qu'adhésif le même polymère d'éthylène acétate de vinyle greffé anhydride maléique mais de plus modifié par un greffage de polyéthylène ou de prolypropylène et un composant d'armature soit composé de PEBA, soit de COPE. Les résultats obtenus étaient également excellents.

On a aussi réalisé des essais avec, en tant qu'adhésif, un polymère d'éthylène-acétate de vinyle-anhydride maléique obtenu par polymérisation directe des monomères constituants et en tant que composant d'armature soit du PEBA, soit du COPE. Les résultats obtenus étaient également excellents.

Par ailleurs, on a fait varier les proportions relatives d'acétate de vinyle, d'éthylène et d'anhydride maléique du composant adhésif. On alors constaté que les propriétés de la composition de l'invention étaient toujours bonnes lorsque le composant adhésif contenaient entre 0,5 % et 40 % en poids d'unités acétate de vinyle et entre 0,5 % et 15 % en poids d'anhydride maléique, le reste étant de l'éthylène. Elles étaient cependant légèrement meilleures lorsque le composant adhésif contenait entre 5 et 25 % en poids d'unités acétate de vinyle et entre 0,5 et 10 % en poids d'anhydride maléique, le reste étant de l'éthylène.

En dehors des limites inférieure et supérieure de poids, en chacun des composants, indiquées ci-dessus,les propriétés d'adhésion et de maintien de la forme, de la pièce fabriquée ,étaient perdues.

Cependant, l'adhésif préféré reste l'adhésif décrit pour les compositions 4B et 8B.

On a également réalisé des essais avec un composant adhésif constitué d'un copolymère d'éthylène-acétate de vinyle non greffé ou copolymérisé avec de l'anhydride maléique mais modifié, à la place, pour contenir des fonctions époxy. Les résultats étaient également bons. Les meilleurs résultats ont été obtenus lorsque les fonctions époxy étaient fournies par du méthacrylate de glycidyle ou un acide acrylique ou un acide méthacrylique. De préférence, dans ce cas on utilisera du méthacrylate de glycidyle en une quantité de 1 à 10 % en poids.

Cependant, dans la composition toute préférée de l'invention, l'adhésif est un copolymère d'éthylène-acétate de vinyle greffé anhydride maléique ayant une teneur en poids en unités acétate de vinyle de 14% et une teneur en poids en anhydride maléique de 0,5 % à 1 %, le reste étant de l'éthylène et le polyéther bloc amide préféré utilisé dans l'invention est un polyéther bloc amide dans lequel les blocs amide sont constitués de polyamide 6 et les segments éther sont à base d'éthylène glycol et/ou de propylène glycol.

Lorsqu'utilisé en mélange avec le terpolymère d'éthylène-propylène-diène, le diène préféré est le butadiène.

Enfin, lorsque le composant d'armature est un polyéther bloc ester comme dans la composition 8B, la partie ester est de préférence constituée par du poly(butylène téréphtalate) (PBTP) dont la partie éther est constituée de motifs éthylène glycol et/ou propylène glycol.

De la même façon, d'excellents résultats ont été obtenus lorsque le rapport en poids du composant adhésif au composant d'armature variait de 80 :20 à 50 :50 bien que le rapport préféré en poids, lorsque le composant d'armature est du PEBA ou un mélange de PEBA avec un autre composant tel que défini ci-dessus soit de 75 :25.

En revanche, lorsque le composant d'armature est un polyéther bloc ester dont la partie ester est constituée par du polybutylène téréphtalate (PBTP) et dont la partie éther est constituée de motifs éthylène glycol et/ou propylène glycol, le rapport préféré en poids du composant adhésif au composant d'armature est de 60 :40.

Ainsi, une composition telle que définie ci-dessus présente d'excellentes qualités de tenue en température, d'étanchéité à la pression, et d'adhésion sur tout support métallique. La composition de l'invention peut également contenir tout additif nécessaire lui conférant d'autres propriétés.

De tels additifs sont bien connus dans l'art et à titre d'exemple, on peut citer : les résines dites «tackifiantes» c'est-à-dire conférant un collant au toucher, des agents ignifugeants, des matériaux de renforcement, des charges faisant volume ou anti-statiques ou fongicides, des anti-oxydants, des stabilisants contre la décomposition à la lumière ou la chaleur, ou des colorants.

Les additifs peuvent être ajoutés seuls ou en mélange de plusieurs.

Ils sont ajoutés habituellement en des quantités variant entre environ 0,03 % et 5 % en poids, mais toute quantité conférant les propriétés supplémentaires désirées à la composition de l'invention, sans affecter de manière nocive ses propriétés remarquables, pourra être utilisée.

Parmi les agents ignifugeants préférés, on citera les agents ignifugeants du type halogène, tels que le tétrabromobenzène, les dérivés du phosphate tels que des phosphates de chloroalkyle; l'alumine hydratée ou l'oxyde de magnésium hydraté.

En tant que matériau de renforcement utilisé dans l'invention on peut utiliser des fibres, des paillettes ou des billes de verre, de carbone ou de mica. Les charges préférées sont le talc, la craie, et la silice.

Parmi les résines tackifiantes préférées, on peut citer des résines du type terpène phénolique dont l'ajout confère un collant au toucher à froid ou à chaud.

Comme on le verra dans ce qui suit, une résine tackifiante préférée est une résine conférant un collant au toucher à froid, du type ester glycolique.

Plus particulièrement, une résine préférée et particulièrement avantageuse est une résine du type ester d'éthylène glycol ou ester de propylène glycol.

Un dérivé de la colophane estérifiée par l'éthylène glycol ou le propylène glycol est encore plus particulièrement préféré.

La composition de l'invention peut donc être avantageusement utilisée pour la fabrication d'obturateurs pour obturer une ouverture quelconque dans tout type de support et en particulier métallique et de réaliser l'étanchéité à l'eau, à la pression et à la poussière de cet obturateur.

Cet obturateur peut être tel que représenté aux figures 3A à 3F déjà discutées.

Cependant, cet obturateur peut également être tel que représenté aux figures 3G et 3H c'est-à-dire sans patte d'accrochage mais avec une rainure 6 pratiquée dans le corps 1 de l'obturateur pour le maintenir en place dans l'ouverture.

Cependant, le bouchon obturateur fabriqué à partir de la composition de l'invention étant flexible, la présence de pattes d'accrochage ou la présence d'une rainure n'est pas nécessaire car le bouchon obturateur de l'invention peut obturer l'ouverture et être maintenu en place, avant passage en étuve par encastrement élastique dans l'ouverture.

Ces deux types d'obturateurs représentés aux figures 3A à 3H peuvent être réalisés par moulage par injection de la composition de l'invention.

La composition de l'invention pourra être utilisée pour ce moulage par injection soit par injection simultanée, en les proportions voulues, de pastilles du composant adhésif et de pastilles du composant formant armature et des additifs souhaités, soit par d'abord mélange intime de tous ces composants, fusion et remise en pastilles de la composition formée puis injection de la composition ainsi formée.

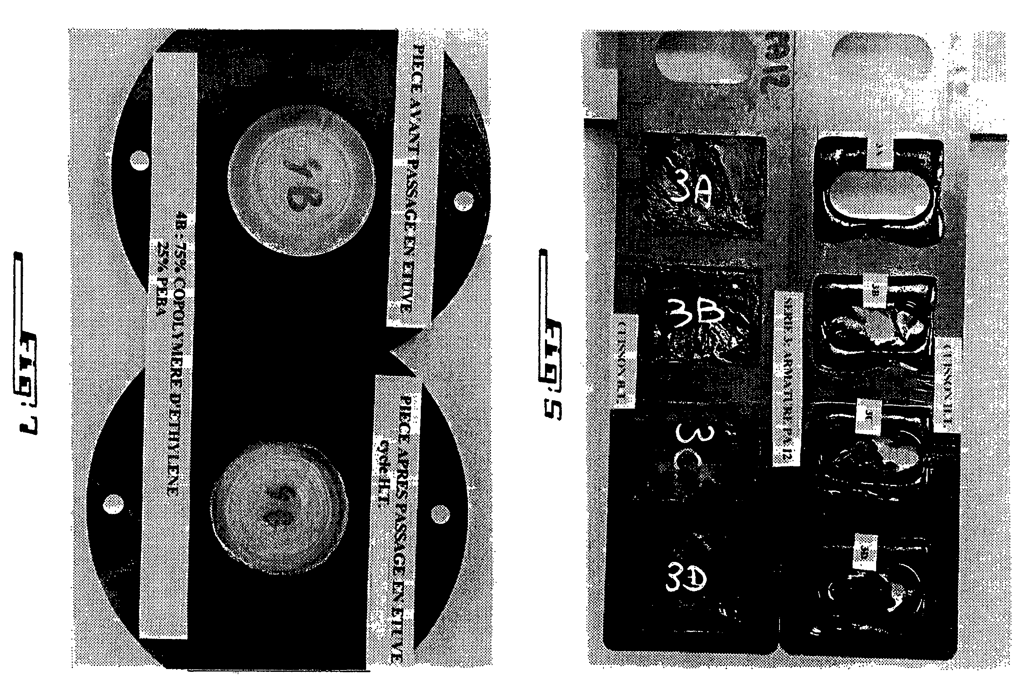

Un autre mode de réalisation du bouchon obturateur de l'invention est représenté aux figures 4A et 4B.

Comme on le voit sur ces figures, le bouchon obturateur de l'invention de l'invention est composé d'une simple plaque 7 ayant des dimensions supérieures à l'ouverture à obturer, plaque 7 revêtue sur au moins une de ses faces d'un film 8 composé de la composition de l'invention contenant une résine collante au toucher à froid, telle qu'une résine du type ester glycolique, de préférence ester d'éthylène glycol ou ester de propylène glycol.

De préférence, la résine collante au toucher à froid sera présente en des quantités comprises entre 0,2 % à 10 % en poids par rapport au poids total de la composition.

Ce mode de réalisation est particulièrement avantageux car le film 8 a alors un collant à froid et ainsi assure l'auto-maintien du bouchon obturateur sur le support 4 comportant l'ouverture à obturer, avant passage à l'étuve.

Ce film 8 aura de préférence une épaisseur comprise entre 0,3 mm et 3 mm.

La plaque 7 ayant sur au moins une de ses faces ce film 8 pourra également avoir une faible épaisseur telle que de 0,5mm à 5 mm.

Ainsi, ce mode de réalisation de l'invention présente deux avantages supplémentaires, le premier étant que le bouchon obturateur ainsi réalisé s'adaptera à la forme de son support 4 en raison de sa souplesse et le second étant que le bouchon obturateur ainsi réalisé occupera un faible volume par rapport à un obturateur classique.

La plaque 7 sur laquelle est apposé le film 8 fait de la composition de l'invention contenant une résine conférant un collant au toucher à froid pourra être constituée de tout matériau voulu à condition qu'il ne se décompose pas ou ne fonde pas ou ne devienne pas trop visqueux aux températures définies ci-dessus de passage en étuve.

Ainsi, elle pourra être constituée d'une composition de l'invention contenant ou non des résines tackifiantes.

Elle pourra également être constituée de matériaux spécifiques conférant des propriétés spécifiques au bouchon obturateur de l'invention.

Par exemple, la plaque 7 pourra être une plaque métallique lorsque des propriétés électriques sont recherchées.

Elle pourra être en élastomère, ce qui conférera des propriétés de filtration acoustique améliorées au bouchon obturateur de l'invention, en particulier lorsqu'on utilisera un élastomère alvéolaire. Dans ce cas, le bouchon obturateur aura également des propriétés de friction améliorées, c'est-à-dire que le glissement sera réduit.

Si l'on veut au contraire augmenter les propriétés de glissement du bouchon obturateur, on utilisera alors une plaque 7 composée de polytétrafluoroéthylène (PTFE).

Si on veut augmenter la rigidité du bouchon obturateur de l'invention, on utilisera une plaque 7 faite d'un plastique rigide du type polyamide ou alliage de polyamide et polypropylène, par exemple.

La plaque 7 pourra être également composée d'une composition thermofusible contenant un agent s'expansant à chaud, de préférence à une température égale à la température minimale des étuves actuellement utilisées, c'est-à-dire de 140°C, ce type de bouchon obturateur pourra être réalisé par exemple par co-extrusion de la plaque 7 et du film 8.

Dans tous les cas, après passage à l'étuve, l'adhésion est réalisée grâce à la fusion du composant adhésif et à son durcissement ultérieur.

Le bouchon obturateur de l'invention conservera une forme acceptable comme montré sur la figure 7 grâce au composant formant armature, après ce passage à l'étuve.

Bien que l'invention ait été décrite en référence à des exemples de réalisation du bouchon de forme cylindrique obturateur, celle-ci n'est nullement limitée à ces exemples. Ainsi, en raison des excellentes propriétés d'aptitude au moulage de la composition de l'invention, le bouchon obturateur pourra prendre toute autre forme que celle cylindrique décrite ici.

De plus, la composition thermocollante de l'invention pourra être, à l'évidence, utilisée pour la fabrication de toute autre pièce qu'un bouchon obturateur et pour d'autres usages, par exemple comme pour la fabrication de films d'emballage alimentaire ou pour réaliser l'isolation acoustique de pièces ne comportant pas d'ouverture.

De la même façon,les couples temps/température donnés ici sont ceux utilisés actuellement, mais, comme on l'a déjà indiqué, ces couples pourront être modifiés, tant que les propriétés d'adhésion et de conservation de la forme des pièces fabriquées à partir des compositions de l'invention seront gardées.

C'est dire que la composition de l'invention peut avoir de nombreuses applications qui apparaîtraient aisément à l'homme de spécialisation ordinaire dans l'art.

**Revendications**

1.  Composition thermocollante du type comprenant un composant adhésif et un composant formant armature **caractérisée en ce que** :

    a) le composant adhésif est choisi parmi

    -   un polymère d'éthylène-acétate de vinyle (EVA)-anhydride maléique, optionnellement modifié avec polyéthylène ou polypropylène, et
    -   un polymère d'éthylène-acétate de vinyle (EVA) modifié pour avoir des fonctions époxy, et

    b) le composant formant armature est choisi parmi

    -   un polyéther bloc ester (COPE) et,
    -   un polyéther bloc amine (PEBA) optionnellement en mélange avec un copolymère d'éthylène-propylène, ledit copolymère d'éthylène-propylène pouvant être remplacé en totalité ou en partie par un terpolymère d'éthylène-propylène-diène (EPDM).

2.  Composition thermocollante selon la revendication 1, **caractérisée en ce que** ledit polymère d'éthylène-acétate de vinyle-anhydride maléique contient entre 0,5 % et 40 % en poids d'unités acétate de vinyle et entre 0,05 % et 15 % en poids d'anhydride maléique, le reste étant de l'éthylène.

3.  Composition thermocollante selon la revendication 1 ou 2, **caractérisée en ce que** ledit copolymère d'éthylène-acétate de vinyle-anhydride maléique contient entre 5 % et 25 % en poids d'unités acétate de vinyle et entre 0,5 % et 10 % en poids d'anhydride maléique, le reste étant de l'éthylène.

4.  Composition thermocollante selon l'une des revendications 1 à 3, **caractérisée en ce que** ledit copolymère d'éthylène-acétate de vinyle-anhydride maléique contient 14 % en poids d'unités acétate de vinyle et entre 0,5 % et 1 % en poids d'anhydride maléïque, le reste étant de l'éthylène.

5.  Composition thermocollante selon l'une quelconque des revendications précédentes **caractérisée en ce que** ledit polymère d'éthylène-acétate de vinyle-anhydride maléique est un copolymère d'éthylène-acétate de vinyle greffé anhydride maléique.

6.  Composition thermocollante selon la revendication 1, **caractérisée en ce que** dans ledit polymère d'éthylène-acétate de vinyle modifié pour avoir des fonctions époxy, les fonctions époxy sont amenées par du méthacrylate de glycidyle ou un acide acrylique ou acide méthacrylique

7.  Composition thermocollante selon la revendication 6, **caractérisée en ce qu'**elle contient 1 à 10 % en poids de méthacrylate de glycidyle.

8.  Composition thermocollante selon l'une des revendications précédentes, **caractérisée en ce que** le composant formant armature est un polyéther bloc ester (COPE) dont la partie ester est constituée par du poly(butylène téréphtalate) (PBTP) et dont la partie éther est constituée de motifs éthylène glycol et/ou propylène glycol.

9.  Composition thermocollante selon l'une des revendications 1 à 7, **caractérisée en ce que** le matériau d'armature est un mélange de PEBA et d'un copolymère d'éthylène-propylène et/ou d'un terpolymère d'éthylène-propylène diène, et **en ce que** le PEBA est constitué de blocs de Nylon® 6 et de segments éther à base d'éthylène glycol et/ou propylène glycol et **en ce que** le diène du terpolymère d'éthylène-propylène-diène, lorsque présent, est du butadiène.

10. Composition thermocollante selon l'une des revendications précédentes, **caractérisée en ce que** le rapport en poids entre ledit composant adhésif et ledit composant formant armature est compris entre 80 :20 et 70 :30.

**11.** Composition selon la revendication 8 **caractérisée en ce que** le rapport en poids entre le composant adhésif et le polyéther bloc ester est de 60 :40.

**12.** Composition selon la revendication 9 **caractérisée en ce que** le rapport en poids entre le composant adhésif et le composant formant armature est de 75 :25.

**13.** Composition selon l'une des revendications précédentes, **caractérisée en ce qu'**elle comprend de plus des additifs tels que des résines conférant un collant au toucher, des agents ignifugeants, des agents de renforcement, des agents antistatiques, des agents anti-fongicides, des agents anti-oxydants, des stabilisants à la lumière et à la chaleur, des colorants, ainsi que des charges, seuls ou en mélange de plusieurs.

**14.** Composition selon l'une des revendications précédentes, **caractérisée en ce qu'**elle contient une résine conférant un collant au toucher à froid.

**15.** Composition selon la revendication 14, **caractérisée en ce que** ladite résine conférant un collant au toucher à froid est du type ester glycolique.

**16.** Composition selon la revendication 15, **caractérisée en ce que** ledit ester glycolique est un ester de diéthylène glycol ou un ester de dipropylène glycol ou un dérivé ester glycolique de la colophane.

**17.** Composition selon l'une des revendications 14 à 16, **caractérisée en ce qu'**elle contient entre 0,2 % et 10 % en poids de ladite résine, par rapport au poids total de la composition.

**18.** Bouchon d'obturation d'une ouverture quelconque d'un support **caractérisé en ce qu'**il est constitué d'une composition selon l'une quelconque des revendications précédentes.

**19.** Bouchon selon la revendication 18, **caractérisé en ce qu'**il comprend une surface de dimensions supérieures à celles de l'ouverture à obturer ainsi qu'un moyen d'accrochage dans ladite ouverture.

**20.** Bouchon d'obturation d'une ouverture quelconque d'un support (4) **caractérisé en ce qu'**il est constitué d'une plaque (7) ayant des dimensions supérieures à celles de l'ouverture à obturer, et ayant une température de fusion et/ou décomposition supérieure à la température maximale utilisée pour coller le bouchon sur son support et **en ce que** la plaque (7) est revêtue sur au moins une de ses faces d'un film (8) fait d'une composition selon l'une des revendications 14 à 17.

**21.** Bouchon selon la revendication 20, **caractérisé en ce que** la plaque (7) est constituée d'une composition selon l'une quelconque des revendications 1 à 17.

**22.** Bouchon selon la revendication 20, **caractérisé en ce que** la plaque (7) est constituée d'un matériau choisi dans le groupe constitué par un métal, un élastomère, un élastomère alvéolé, un plastique rigide, du polytétrafluoroéthylène et une composition thermofusible contenant un agent d'expansion se décomposant à une température supérieure ou égale à 140°C.

**23.** Bouchon selon l'une des revendications 20 à 22, **caractérisée en ce que** la plaque (7) a une épaisseur comprise entre 0,5 mm et 5 mm et **en ce que** le film (8) a une épaisseur comprise entre 0,3 mm et 3 mm.

**24.** Bouchon selon l'une des revendications 18 à 23, **caractérisé en ce que** le support (4) dont l'ouverture à obturer est un support métallique.

**25.** Utilisation de la composition selon l'une quelconque des revendications 1 à 17 pour la fabrication d'un bouchon pour obturer une ouverture quelconque de tout type de support.

**Patentansprüche**

**1.** Thermoklebende Zusammensetzung vom Typ mit einer Haftkomponente und einer Bewehrungskomponente, **dadurch gekennzeichnet, dass**:

a) die Haftkomponente ausgewählt ist aus

- Vinylacetatethylenpolymer (EVA) - Maleinsäureanhydrid, wahlweise modifiziert mit Polyethylen oder Polypropylen, und
- Vinylacetatethylenpolymer (EVA), modifiziert zwecks Epoxyd-Funktionen, und

b) die Bewehrungskomponente ausgewählt ist aus

- Polyetherblockester (COPE) und
- Polyetherblockamin (PEBA), wahlweise als Gemisch mit Ethylenpropylen-Copolymer, wobei das Ethylenpropylen-Copolymer vollständig oder teilweise durch Ethylenpropylendien-Terpolymer (EPDM) ersetzt sein kann.

2. Thermoklebende Zusammensetzung nach Anspruch 1, **dadurch gekennzeichnet, dass** das genannte Vinylacetatethylenpolymer-Maleinsäureanhydrid zwischen 0,5 Gew.-% und 40 Gew.-% Vinylacetateinheiten und zwischen 0,05 Gew.-% und 15 Gew.-% Maleinsäureanhydrid enthält, wobei der Rest Ethylen ist.

3. Thermoklebende Zusammensetzung nach Anspruch 1 oder 2, **dadurch gekennzeichnet, dass** das genannte Vinylacetatethylenpolymer-Maleinsäureanhydrid zwischen 5 Gew.-% und 25 Gew.-% Vinylacetateinheiten und zwischen 0,5 Gew.-% und 10 Gew.-% Maleinsäureanhydrid enthält, wobei der Rest Ethylen ist.

4. Thermoklebende Zusammensetzung nach einem der Ansprüche 1 bis 3, **dadurch gekennzeichnet, dass** das genannte Vinylacetatethylenpolymer-Maleinsäureanhydrid 14 Gew.-% und 40 Gew.-% Vinylacetateinheiten und zwischen 0,5 Gew.-% und 1 Gew.-% Maleinsäureanhydrid enthält, wobei der Rest Ethylen ist.

5. Thermoklebende Zusammensetzung nach einem der vorangehenden Ansprüche, **dadurch gekennzeichnet, dass** das genannte Vinylacetatethylenpolymer-Maleinsäureanhydrid ein Vinylacetatethylenpropfcopolymer-Maleinsäureanhydrid ist.

6. Thermoklebende Zusammensetzung nach Anspruch 1, **dadurch gekennzeichnet, dass** im genannten, zwecks Epoxyd-Funktionen modifizierten Vinylacetatethylenpolymer, die Epoxyd-Funktionen durch Glycidylmethacrylat oder Acrylsäure oder Methacrylsäure zugeführt werden.

7. Thermoklebende Zusammensetzung nach Anspruch 6, **dadurch gekennzeichnet, dass** sie 1 bis 10 Gew.-% Glycidylmethacrylat enthält.

8. Thermoklebende Zusammensetzung nach einem der vorangehenden Ansprüche, **dadurch gekennzeichnet, dass** die Bewehrungskomponente Polyetherblockester (COPE) ist, dessen Esteranteil aus Poly(Butylenterephthalat) (PBTP) und dessen Etheranteil aus Ethylenglykol- und/oder Propylenglykol-Einheiten besteht.

9. Thermoklebende Zusammensetzung nach einem der Ansprüche 1 bis 7, **dadurch gekennzeichnet, dass** das Bewehrungsmaterial ein Gemisch aus PEBA und Ethylenpropylen-Copolymer und/oder Ethylenpropylendien-Terpolymer ist, und dass das PEBA aus Nylon® 6-Blöcken und Ethersegmenten auf Ethylenglykol- und/oder Propylenglykol-Basis besteht, und dass das Dien von Ethylenpropylendien-Terpolymer, falls vorhanden, Butadien ist.

10. Thermoklebende Zusammensetzung nach einem der vorangehenden Ansprüche, **dadurch gekennzeichnet, dass** das Gewichtverhältnis zwischen der genannten Haftkomponente und der genannten Bewehrungskomponente zwischen 80:20 und 70:30 liegt.

11. Thermoklebende Zusammensetzung nach Anspruch 8, **dadurch gekennzeichnet, dass** das Gewichtverhältnis zwischen der Haftkomponente und dem Polyetherblockester bei 60:40 liegt.

12. Thermoklebende Zusammensetzung nach Anspruch 9, **dadurch gekennzeichnet, dass** das Gewichtverhältnis zwischen der Haftkomponente und der Bewehrungskomponente bei 75:25 liegt.

13. Thermoklebende Zusammensetzung nach einem der vorangehenden Ansprüche, **dadurch gekennzeichnet, dass** sie ferner Zusätze enthält, wie etwa bei Kontakt Haftung verleihende Harze, Flammenhemmstoffe, Verstärkungsmittel, antistatische Mittel, Antifungizidmittel, Antioxidationsmittel, Licht- und Wärmestabilisatoren, Farbstoffe sowie Füllstoffe, allein oder zu mehreren als Gemisch.

14. Thermoklebende Zusammensetzung nach einem der vorangehenden Ansprüche, **dadurch gekennzeichnet, dass** sie ein bei Kaltkontakt Haftung verleihendes Harz enthält.

15. Thermoklebende Zusammensetzung nach Anspruch 14, **dadurch gekennzeichnet, dass** das genannte bei Kaltkontakt Haftung verleihende Harz vom Typ Glykolester ist.

16. Thermoklebende Zusammensetzung nach Anspruch 15, **dadurch gekennzeichnet, dass** der genannte Glykolester Glykoldiethylenester oder Glykoldipropylenester oder ein Glykolesterderivat aus Kolophonium ist.

17. Thermoklebende Zusammensetzung nach einem der Ansprüche 14 bis 16, **dadurch gekennzeichnet, dass** sie im Verhältnis zum Gesamtgewicht der Zusammensetzung zwischen 0,2 Gew.-% und 10 Gew.-% des genannten Harzes aufweist.

18. Verschlussstopfen einer beliebigen Öffnung eines Trägers, **dadurch gekennzeichnet, dass** er aus einer Zusammensetzung nach einem der vorangehenden Ansprüche besteht.

19. Stopfen nach Anspruch 18, **dadurch gekennzeichnet, dass** er eine Fläche mit größeren Abmessungen als die zu verschließende Öffnung sowie ein Mittel zum Einhängen in die genannte Öffnung aufweist.

20. Verschlussstopfen einer beliebigen Öffnung eines Trägers (4), **dadurch gekennzeichnet, dass** er aus einer Platte (7) besteht, deren Abmessungen größer sind als die der zu verschließenden Öffnung und die eine Schmelz- und/ oder Zersetzungstemperatur aufweist, die höher als die maximal angewendete Temperatur zum Kleben des Stopfens auf seinen Träger ist, und dass die Platte (7) an mindestens einer ihrer Seiten mit einer Folie (8) beschichtet ist, die aus einer Zusammensetzung nach einem der Ansprüche 14 bis 17 hergestellt ist.

21. Stopfen nach Anspruch 20, **dadurch gekennzeichnet, dass** die Platte (7) aus einer Zusammensetzung nach einem der Ansprüche 1 bis 17 besteht.

22. Stopfen nach Anspruch 20, **dadurch gekennzeichnet, dass** die Platte (7) aus einem Material besteht, das ausgewählt ist aus Metall, Elastomer, Zellelastomer, starrem Kunststoff, Polytetrafluorethylen und einer heißschmelzbaren Zusammensetzung mit einem Expansionsmittel, das sich bei einer Temperatur höher oder gleich 140°C zersetzt.

23. Stopfen nach einem der Ansprüche 20 bis 22, **dadurch gekennzeichnet, dass** die Platte (7) eine Dicke zwischen 0,5 mm und 5 mm aufweist, und dass die Folie (8) eine Dicke zwischen 0,3 mm und 3 mm aufweist.

24. Stopfen nach einem der Ansprüche 18 bis 23, **dadurch gekennzeichnet, dass** der Träger (4), dessen Öffnung zu verschließen ist, ein Metallträger ist.

25. Verwendung der Zusammensetzung nach einem der Ansprüche 1 bis 17 zum Herstellen eines Stopfens zum Verschließen einer beliebigen Öffnung eines Trägers jeglicher Art.

**Claims**

1. Heat-sealing composition of the type comprising an adhesive component and a carcass-forming component, **characterised in that**

   a) the adhesive component is selected from

   -   an ethylene-vinyl acetate (EVA)-maleic anhydride polymer, optionally modified by polyethylene or polypropylene and
   -   an ethylene-vinyl acetate (EVA) polymer modified so as to have epoxy functions and

   b) the component forming the carcass is selected from

- a polyether block ester (COPE) and
- a polyether block amine (PEBA) optionally mixed with an ethylene-propylene copolymer wherein said ethylene-propylene copolymer may be replaced wholly or partially by an ethylene-propylene-diene terpolymer (EPDM).

2. Heat-sealing composition according to claim 1, **characterised in that** said ethylene-vinyl acetate-maleic anhydride polymer contains between 0.5% and 40% by weight of vinyl acetate units and between 0.05% and 15% by weight of maleic anhydride, the remainder being ethylene.

3. Heat-sealing composition according to claim 1 or 2, **characterised in that** said ethylene-vinyl acetate-maleic anhydride copolymer contains between 5% and 25% by weight of vinyl acetate units and between 0.5% and 10% by weight of maleic anhydride, the remainder being ethylene.

4. Heat-sealing composition according to any of claims 1 to 3, **characterised in that** said ethylene-vinyl acetate-maleic anhydride copolymer contains 14% by weight of vinyl acetate units and between 0.5% and 1% by weight of maleic anhydride, the remainder being ethylene.

5. Heat-sealing composition according to any of the preceding claims, **characterised in that** said ethylene-vinyl acetate-maleic anhydride polymer is an ethylene-vinyl acetate- maleic anhydride graft copolymer.

6. Heat-sealing composition according to claim 1, **characterised in that** the epoxy functions are imparted to said modified ethylene-vinyl acetate polymer by glycidyl methacrylate or an acrylic acid or methacrylic acid.

7. Heat-sealing composition according to claim 6, **characterised in that** it contains 1 to 10% by weight of glycidyl methacrylate.

8. Heat-sealing composition according to any of the preceding claims, **characterised in that** the component forming the carcass is a polyether block ester (COPE) of which the ester portion consists of poly(butylene terephthalate) (PBTP) and of which the ether portion consists of ethylene glycol and/or propylene glycol units.

9. Heat-sealing composition according to any of claims 1 to 7, **characterised in that** the carcass material is a mixture of PEBA and an ethylene-propylene copolymer and/or an ethylene-propylene-diene terpolymer and **in that** the PEBA consists of blocks of Nylon® 6 and ether segments based on ethylene glycol and/or propylene glycol and **in that** the diene of the ethylene-propylene-diene terpolymer, if present, is butadiene.

10. Heat-sealing composition according to any of the preceding claims, **characterised in that** the ratio by weight of said adhesive component to said carcass-forming component is between 80:20 and 70:30.

11. Composition according to claim 8, **characterised in that** the ratio by weight of the adhesive component to the polyether block ester is 60:40.

12. Composition according to claim 9, **characterised in that** the ratio by weight of the adhesive component to the carcass-forming component is 75:25.

13. Composition according to any of the preceding claims, **characterised in that** it also comprises additives such as resins which lead to a contact adhesive, fire retardants, reinforcing agents, antistatic agents, antifungal agents, antioxidants, light and heat stabilisers, colorants as well as fillers, alone or in a mixture of a plurality thereof.

14. Composition according to any of the preceding claims, **characterised in that** it contains a resin which leads to a cold contact adhesive.

15. Composition according to claim 14, **characterised in that** said resin which leads to a cold contact adhesive is of the glycol ester type.

16. Composition according to claim 15, **characterised in that** said glycol ester is a diethylene glycol ester or a dipropylene glycol ester or a glycol ester derivative of colophony.

17. Composition according to any of claims 14 to 16, **characterised in that** it contains between 0.2% and 10% by weight of said resin, based on the total weight of the composition.

18. Closure plug for any orifice in a support, **characterised in that** it consists of a composition according to any of the preceding claims.

19. Plug according to claim 18, **characterised in that** it has an area with dimensions greater than those of the orifice to be closed as well as a means for fastening it in said orifice.

20. Closure plug for any orifice in a support (4), **characterised in that** it consists of a plate (7) having dimensions greater than those of the orifice to be closed and having a melting and/or decomposition temperature higher than the maximum temperature used to glue the plug on its support and **in that** the plate (7) is covered, on at least one of its faces, with a film (8) made of a composition according to any of claims 14 to 17.

21. Plug according to claim 20, **characterised in that** the plate (7) consists of a composition according to any of claims 1 to 17.

22. Plug according to claim 20, **characterised in that** the plate (7) consists of a material selected from the group consisting of a metal, an elastomer, a foamed elastomer, a rigid plastic, polytetrafluoroethylene and a hot-melt composition containing an expansion agent which decomposes at a temperature higher than or equal to 140°C.

23. Plug according to any of claims 20 to 22, **characterised in that** the plate (7) has a thickness of between 0.5 mm and 5 mm and **in that** the film 8 has a thickness of between 0.3 mm and 3 mm.

24. Plug according to any of claims 18 to 23, **characterised in that** the support (4) of which the orifice is to be closed is a metal support.

25. Use of the composition according to any of claims 1 to 17 for the production of a plug for closing any orifice of any type of support.

Fig. 1A

Fig. 1B

Fig. 3A

Fig. 3B

Fig. 3C

Fig. 2A

Fig. 2B

Fig. 2C

Fig. 2D

Fig. 3 D

Fig. 3 E

Fig. 3 F

Fig. 3 H

Fig. 3 G

Fig. 4 A

Fig. 4 B

_Fig. 5_

_Fig. 7_

Fig. 6 A

Fig. 6 B

Fig. 8A

Fig. 8B

Fig. 9

**Fig. 10 A**

**Fig. 10 B**

**Fig. 11 A**

**Fig. 11 B**